# EUROPEAN PATENT APPLICATION

(11) **EP 1 059 033 A1**
(43) Date of publication of application: **13.12.2000**
(21) Application number: 99905297.0
(22) Date of filing: 24.02.1999
(51) Int. Cl.: A01N 33/04

(54) **INDUSTRIAL ANTIBACTERIAL/ANTIFUNGAL AGENTS, ALGICIDES AND ANTI-BIOLOGICAL ADHESION AGENTS CONTAINING BENZYLAMINES**

(30) Priority: 25.02.1998 JP 4364698; 25.02.1998 JP 4364798
(71) Applicant: Nissan Chemical Industries, Ltd., Chiyoda-ku, Tokyo 101-0054 (JP)
(72) Inventor: IGARASHI, Shinichi, Nissan Chemical Ind., Ltd., Minamisaitama-gun, Saitama-ken 349-0294 (JP); NISHINO, Taito, Nissan Chemical Industries, Ltd., Minamisaitama-gun, Saitama-ken 349-0294 (JP)
(74) Representative: HOFFMANN - EITLE
(86) International application number: JP9900842
(87) International publication number: WO9943207

(57) **Abstract**

An industrial antibacterial and antifungal agent, an algicide, and an agent for preventing adhesion of organisms containing the benzylamine of the general formula (1) 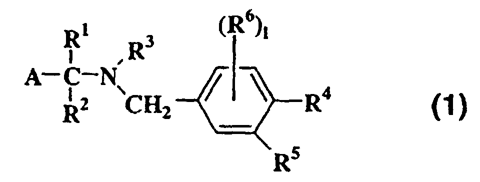 or acid addition salt thereof,
wherein
A is a group of the general formula (2) 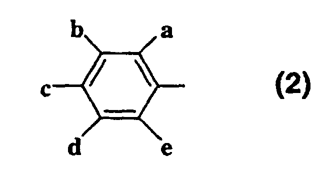 in which a to e are H, C₁₋₄ alkyl, C₁₋₄ alkoxy, halogen or C₁₋₄ halogenated alkyl, or a naphthyl; R¹, R² are H, C₁₋₄ alkyl; or A-C(-R¹)(-R²)- are together a group of the general formula (3) or (4) 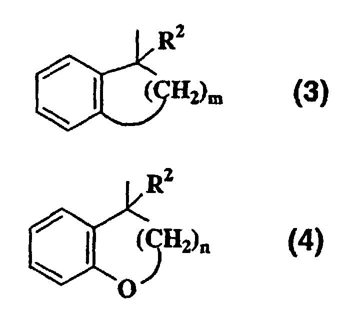 in which m is 2 or 3; and n is 1 or 2; R³ is H or C₁₋₄ alkyl; R⁴, R⁵ are H or C₁₋₆ alkyl, C₁₋₅ alkoxy, halogen or C₁₋₅ halogenated alkyl, a cyano or C₁₋₅ cyanoalkyl; R⁶ is C₁₋₄ alkyl, C₁₋₄ alkoxy or halogen; and l is 0 to 2.

## Description

### Technical Field

The present invention relates to an antibacterial and antifungal agent and an algicide for industrial products, to an antibacterial and antifungal agent and an algicide for using in the production process of industrial products, and to an agent for preventing adhesion of organisms for preventing the adhesion of harmful aquatic organisms such as shellfishes.

### Background Art

An industrial antibacterial and antifungal agent and an algicide are used to eliminate various evil influences caused by the growth and propagation of bacteria, fungi and algae at various kinds of industrial products and industrial facilities.

Heretofore, organic nitrogen-containing compounds, organic nitrogen-sulfur containing compounds, organic halogen-containing compounds, nitrogen-containing aliphatic polymers and heavy metal coordination compounds have been used as the industrial antibacterial and antifungal agent and the algicide.

An agent for preventing adhesion of organisms is used to prevent harmful aquatic organisms such as shellfishs from adhering to fishing nets, bottoms of ships, equipment placed in the sea such as buoys, marine constructions, condensers of cooling water systems at thermal or nuclear power plants, inlet channels of cooling water for heat exchangers of chemical industries, underwater constructions, reservoirs or the like.

When aquatic organisms are adhered to culturing nets, openings of the nets are clogged, resulting in a decrease of circulation of seawater to inhibit growth of cultured fish, and in many occurrences of fish diseases.

The adhesion of aquatic organisms to ships causes an increase in fluid resistance with the result of a reduction in sailing speed, an increase in fuel consumption, and a loss in the cost for cleaning the bottom of the ship and the cost caused by the suspension of service.

The adhesion of aquatic organisms to marine equipment, or marine or water constructions invites an increase in weight and remarkable in convenience in handling operation. The adhesion of aquatic organisms to inlet channels causes a decrease in thermal conductivity, and also causes the problems that the inlet channels are clogged, and the amount of intake water is decreased.

Heretofore, to prevent the adhesion and propagation of seawater organisms and freshwater organisms, an antifouling coating containing an organotin compound such as bis(tributyltin) oxide, or a copper compound such as copper sulfate or cuprous oxide has been used.

Japanese Patent Application Laid-open No. Sho 64-6242 discloses tertiary amine derivatives, their production method and their use as agricultural and horticultural fungicide. Also Japanese Patent Application Laid-open No. Sho 61-45 discloses naphthylmethylamine derivatives, their production method and their use as medical antimycotic agent.

However, as for the compounds described in the above-mentioned publications, there is no description about uses as industrial antibacterial and antifungal agents, algicides, and agents for preventing adhesion of organisms.

The above-described organic nitrogen compounds, organic nitrogen sulfur compounds, organic halogen compounds, nitrogen-containing aliphatic polymers and heavy metal coordination compounds, which are used as industrial antibacterial and antifungal agents and algicides, include those chemicals which are stimulative and cause a problem from a view point of the Labor Safety Law, those chemicals which are used in large doses and cause a problem from a view point of environmental protection, those chemicals which release formalin or halogens and have the possibility of environmental pollution and an influence upon the human body, and those chemicals which have the possibility of environmental pollution with a heavy metal. Therefore, it cannot be said that all the industrial antibacterial and antifungal agents and algicides are composed of favorable chemicals only.

Although the above organotin compounds as an agent for preventing adhesion of organisms are effective in preventing the adhesion of aquatic organisms, they have high toxicity, accumulate in particular in the body of fishes or shellfishes remarkably and are now regulated because it promotes environmental pollution.

For example, in the United States of America, use of organotin-based ship paints is prohibited to ships as long as 65 feet or less by the Organic Tin Antifouling Paint Regulation (1987), and in the United Kingdom, use of tributyltin-containing agents for preventing adhesion of organisms to ships as long as 25 m or less and marine agriculture is prohibited by the Food and Environmental Protection Law (1987).

In Japan, tributyltin oxide is designated as a specified chemical substance of the first kind, and triphenyltin compounds and tributyltin compounds are designated as specified chemical substances of the second kind by the Chemical Substance Examination Rule (1990). Thus, use of these compounds in fishing nets is prohibited.

Further, it is also taken a measure for the control of use of tributyltin-based paints in the bottom of a ship (Notification by the Ministry of Transport, 1990).

The above copper compounds are widely used in antifouling coatings for inlet channels and bottoms of ships. However, since the copper compounds contain, like tin compounds, copper which is a heavy metal, the use thereof is anxious for environmental pollution in future. Therefore, it cannot be said that the copper compounds are favorable agents for preventing adhesion of organisms.

### Summary of the Invention

The inventors of the present invention have conducted intensive studies to solve the above problems and have found that the benzylamines of the following general formula (I) can be an industrial antibacterial and antifungal agent, an algicide, and an agent for preventing adhesion of organisms which have high safety, exhibit a wide spectrum with a small amount from a view point of prevention of environmental pollution and have high practical applicability. Thus, the present invention has been accomplished based on these findings.

That is, the present invention relates to an industrial antibacterial and antifungal agent, an algicide and an agent for preventing adhesion of organisms characterized by containing the benzylamine of the general formula (1) 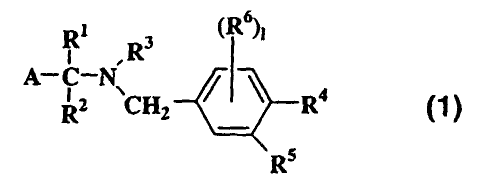 or acid addition salt thereof,
wherein
A is a group of the general formula (2) 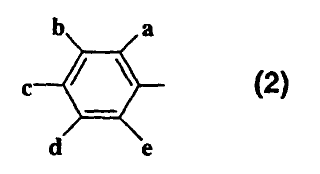 in which a, b, c, d and e are each independently a hydrogen atom, an alkyl having 1 to 4 carbon atoms, an alkoxy having 1 to 4 carbon atoms, a halogen atom or a halogenated alkyl having 1 to 4 carbon atoms, or a naphthyl; R¹ and R² are each independently a hydrogen atom or an alkyl having 1 to 4 carbon atoms; or A-C(-R¹)(-R²)-are together a group of the general formula (3) or (4) 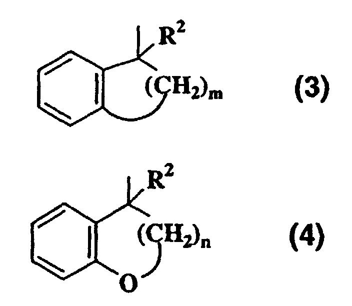 in which m is 2 or 3; and n is 1 or 2; R³ is a hydrogen atom or an alkyl having 1 to 4 carbon atoms; R⁴ and R⁵ are each independently a hydrogen atom, an alkyl having 1 to 6 carbon atoms, an alkoxy having 1 to 5 carbon atoms, a halogen atom, a halogenated alkyl having 1 to 5 carbon atoms, a cyano or a cyanoalkyl having 1 to 5 carbon atoms; R⁶ is an alkyl having 1 to 4 carbon atoms, an alkoxy having 1 to 4 carbon atoms or a halogen atom; and l is 0 to 2.

Each of the substituents shown in the general formula (1) will be described in concrete terms.

In the specification, "n" means normal, "i" iso, "s" secondary, "t" tertiary and "c" cyclo.

As for alkyls having 1 to 4 carbon atoms, straight-chain, branched and cyclic alkyl groups are included, and examples of them are methyl, ethyl, n-propyl, i-propyl, c-propyl, n-butyl, i-butyl, s-butyl, t-butyl, c-butyl, 1-methyl-c-propyl and 2-methyl-c-propyl and the like. Examples of alkyls having 1 to 6 carbon atoms are, in addition to the above, n-pentyl, 1-methyl-n-butyl, 2-methyl-n-butyl, 3-methyl-n-butyl, 1,1-dimethyl-n-propyl, 1,2-dimethyl-n-propyl, 2,2-dimethyl-n-propyl, 1-ethyl-n-propyl, c-pentyl, 1-methyl-c-butyl, 2-methyl-c-butyl, 3-methyl-c-butyl, 1,2-dimethyl-c-propyl, 2,3-dimethyl-c-propyl, 1-ethyl-c-propyl, 2-ethyl-c-propyl, n-hexyl, 1-methyl-n-pentyl, 2-methyl-n-pentyl, 3-methyl-n-pentyl, 4-methyl-n-pentyl, 1,1-dimethyl-n-butyl, 1,2-dimethyl-n-butyl, 1,3-dimethyl-n-butyl, 2,2-dimethyl-n-butyl, 2,3-dimethyl-n-butyl, 3,3-dimethyl-n-butyl, 1-ethyl-n-butyl, 2-ethyl-n-butyl, 1,1,2-trimethyl-n-propyl, 1,2,2-trimethyl-n-propyl, 1-ethyl-1-methyl-n-propyl, 1-ethyl-2-methyl-n-propyl, 2-ethyl-2-methyl-n-propyl, c-hexyl, 1-methyl-c-pentyl, 2-methyl-c-pentyl, 3-methyl-c-pentyl, 1-ethyl-c-butyl, 2-ethyl-c-butyl, 3-ethyl-c-butyl, 1,2-dimethyl-c-butyl, 1,3-dimethyl-c-butyl, 2,2-dimethyl-c-butyl, 2,3-dimethyl-c-butyl, 2,4-dimethyl-c-butyl, 3,3-dimethyl-c-butyl, 1-n-propyl-c-propyl, 2-n-propyl-c-propyl, 1-i-propyl-c-propyl, 2-i-propyl-c-propyl, 1,2,2-trimethyl-c-propyl, 1,2,3-trimethyl-c-propyl, 2,2,3-trimethyl-c-propyl, 1-ethyl-2-methyl-c-propyl, 2-ethyl-1-methyl-c-propyl, 2-ethyl-2-methyl-c-propyl, 2-ethyl-3-methyl-c-propyl and the like.

As for alkoxy groups having 1 to 4 carbon atoms, straight-chain, branched and cyclic alkoxy groups are included, and examples of them are methoxy, ethoxy, n-propoxy, i-propoxy, c-propoxy, n-butoxy, i-butoxy, s-butoxy, t-butoxy, c-butoxy, 1-methyl-c-propoxy, 2-methyl-c-propoxy and the like. Examples of alkoxy groups having 1 to 5 carbon atoms are, in addition to the above, n-pentyloxy, 1-methyl-n-butoxy, 2-methyl-n-butoxy, 3-methyl-n-butoxy, 1,1-dimethyl-n-propoxy, 1,2-dimethyl-n-propoxy, 2,2-dimethyl-n-propoxy, 1-ethyl-n-propoxy, c-pentyl, 1-methyl-c-butoxy, 2-methyl-c-butoxy, 3-methyl-c-butoxy, 1,2-dimethyl-c-propoxy, 2,3-dimethyl-c-propoxy, 1-ethyl-c-propoxy, 2-ethyl-c-propoxy and the like.

Examples of halogen atoms are fluorine, chlorine, bromine and iodine.

As for halogenated alkyl groups having 1 to 4 carbon atoms, straight-chain, branched and cyclic alkyl groups are included, and examples of them are mono-, di-, tri-substitution products of methyl, ethyl, n-propyl, i-propyl, c-propyl, n-butyl, i-butyl, s-butyl, t-butyl, c-butyl, 1-methyl-c-propyl, 2-methyl-c-propyl and the like with fluorine atoms, chlorine atoms, bromine atoms and iodine atoms. Examples of halogenated alkyl groups having 1 to 5 carbon atoms are, in addition to the above, mono-, di-, tri-substitution products of n-pentyl, 1-methyl-n-butyl, 2-methyl-n-butyl, 3-methyl-n-butyl, 1,1-dimethyl-n-propyl, 1,2-dimethyl-n-propyl, 2,2-dimethyl-n-propyl, 1-ethyl-n-propyl, c-pentyl, 1-methyl-c-butyl, 2-methyl-c-butyl, 3-methyl-c-butyl, 1,2-dimethyl-c-propyl, 2,3-dimethyl-c-propyl, 1-ethyl-c-propyl, 2-ethyl-c-propyl and the like with fluorine atoms, chlorine atoms, bromine atoms and iodine atoms.

As for cyanoalkyl groups having 1 to 5 carbon atoms, straight-chain, branched and cyclic alkyl groups are included, and examples of them are mono-substitution products of methyl, ethyl, n-propyl, i-propyl, c-propyl, n-butyl, i-butyl, s-butyl, t-butyl, c-butyl, 1-methyl-c-propyl, 2-methyl-c-propyl, n-pentyl, 1-methyl-n-butyl, 2-methyl-n-butyl, 3-methyl-n-butyl, 1,1-dimethyl-n-propyl, 1,2-dimethyl-n-propyl, 2,2-dimethyl-n-propyl, 1-ethyl-n-propyl, c-pentyl, 1-methyl-c-butyl, 2-methyl-c-butyl, 3-methyl-c-butyl, 1,2-dimethyl-c-propyl, 2,3-dimethyl-c-propyl, 1-ethyl-c-propyl, 2-ethyl-c-propyl and the like with a cyano group.

Forms of acid addition salts include hydrofluorides, hydrochlorides, sulfates, hydrobromides, hydroiodides, aliphatic and aromatic carboxylates, aliphatic and aromatic sulfonates and the like.

The industrial antibacterial and antifungal agent, the algicide and the agent for preventing adhesion of organisms of the present invention may contain the benzylamines of the above general formula (1) or the acid addition salts thereof as the active ingredient.

The preferred compounds contained as an active ingredient of the industrial antibacterial and antifungal agent, the algicide and the agent for preventing adhesion of organisms of the present invention are listed in Tables 1, 2 and 3 below. However, the compounds used in the present invention are not limited to these.

Symbols in the table mean the followings;
Me: methyl group, Et: ethyl group, n-Pr: normal propyl group, i-Pr: isopropyl group, n-Bu: normal butyl group, i-Bu: isobutyl group, s-Bu: secondary butyl group, t-Bu: tertiary butyl group, n-Pen: normal pentyl group, i-Pen: isopentyl group, neo-Pen: neopentyl group, t-Pen: tertiary pentyl group, n-Hex: normal hexyl group, OMe: methoxy group, OEt: ethoxy group, OPr-n: normal propoxy group, OPr-i: isopropoxy group, OBu-n: normal butoxy group, OPen-n: normal pentyloxy group.

Moreover, Q-1, Q-2, Q-3 and Q-4 in Table 3 mean as follows.

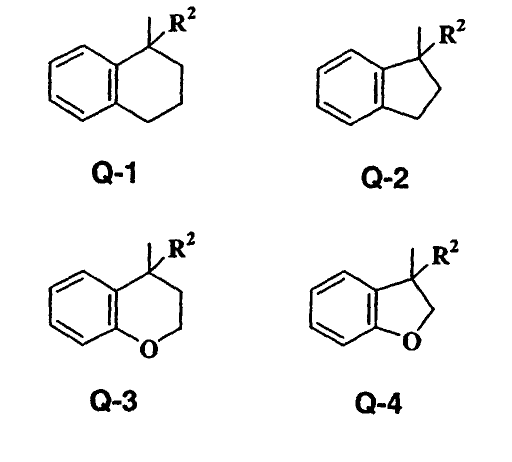

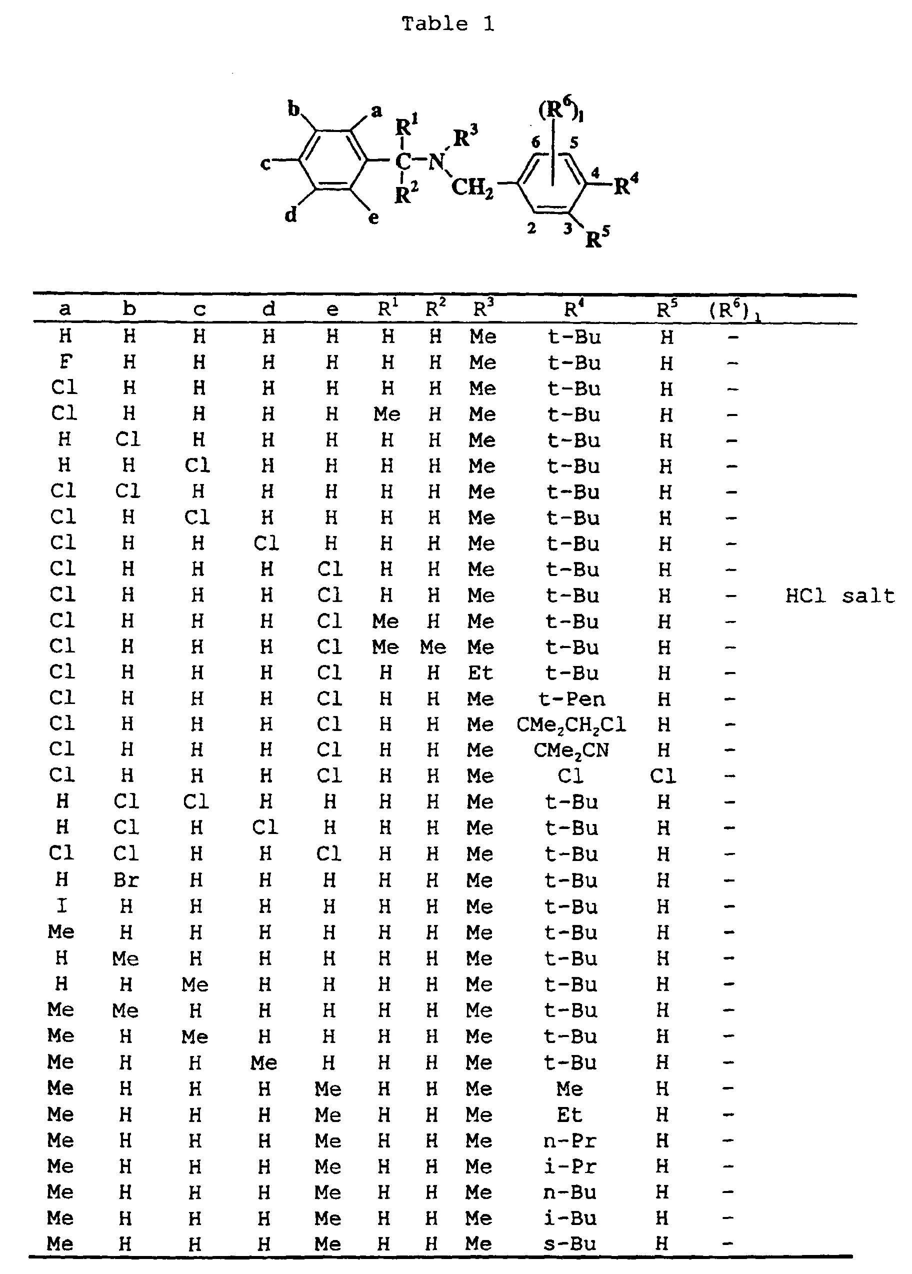

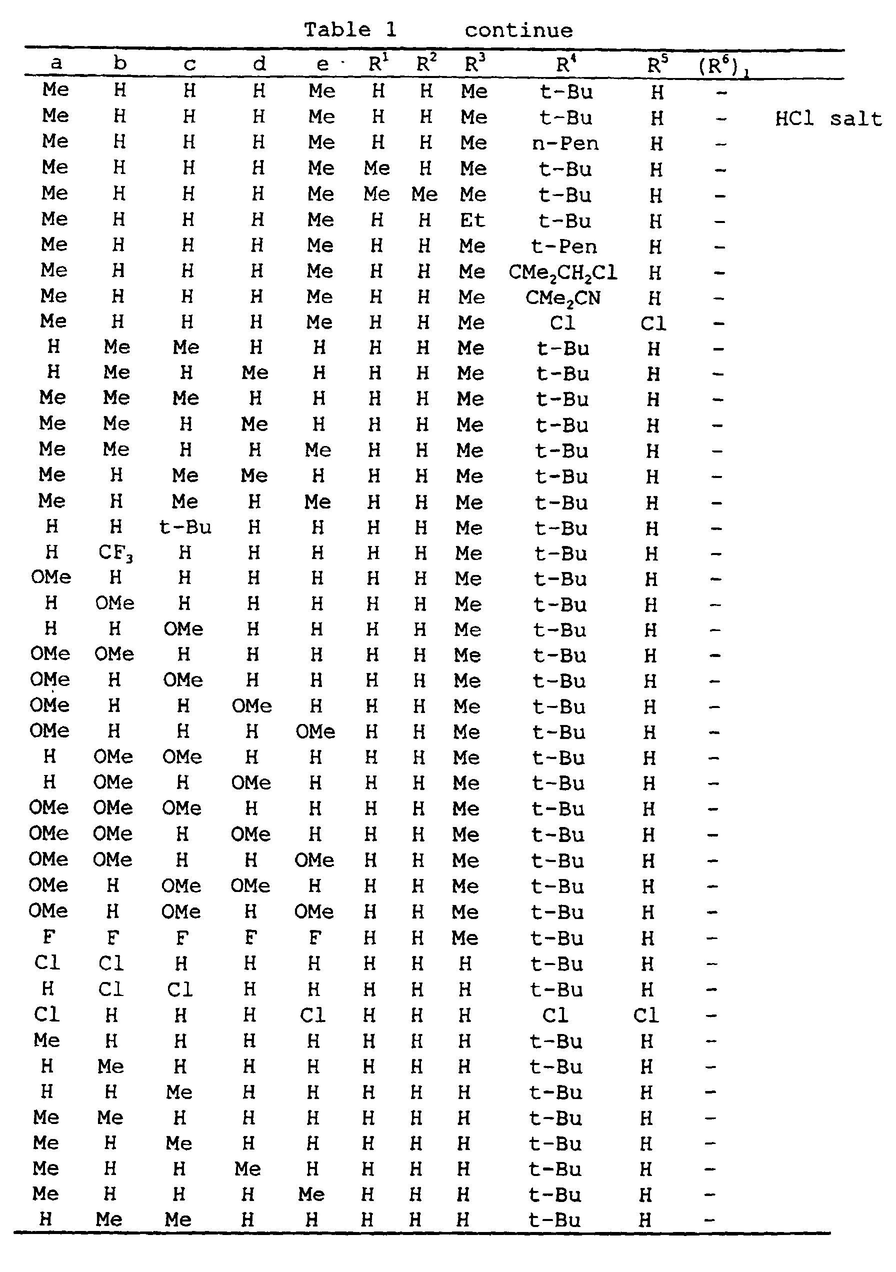

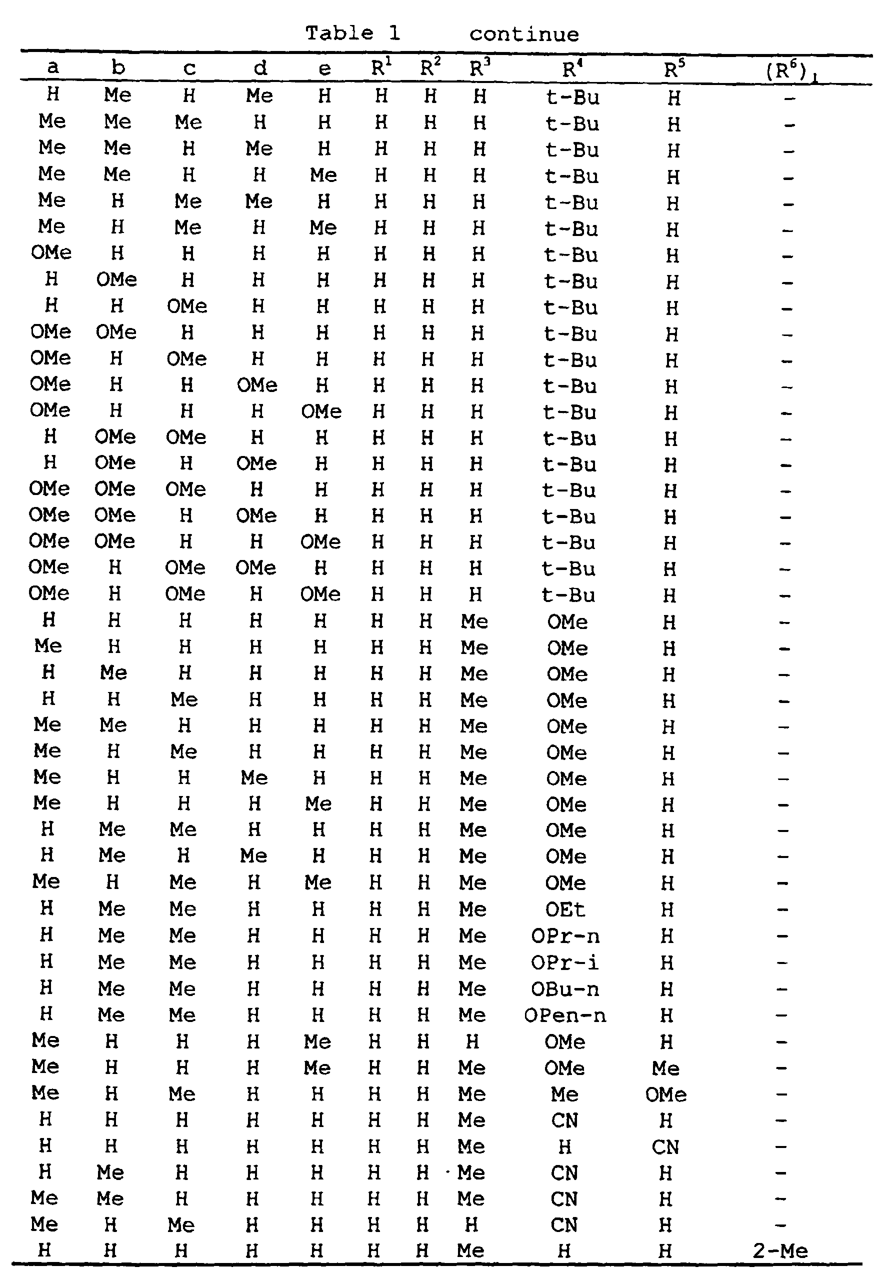

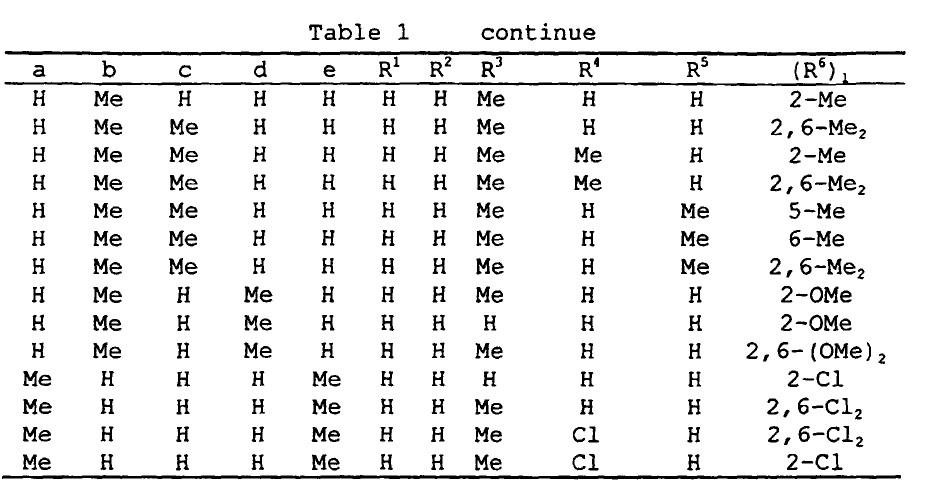

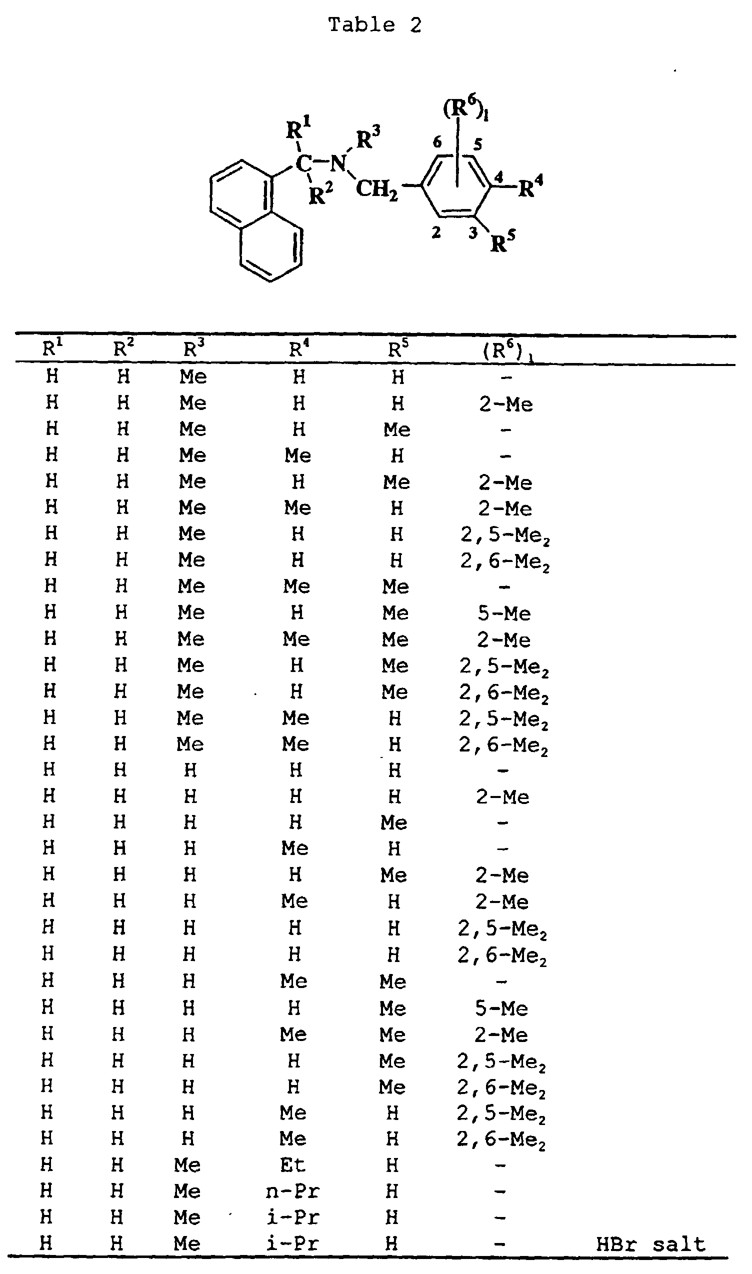

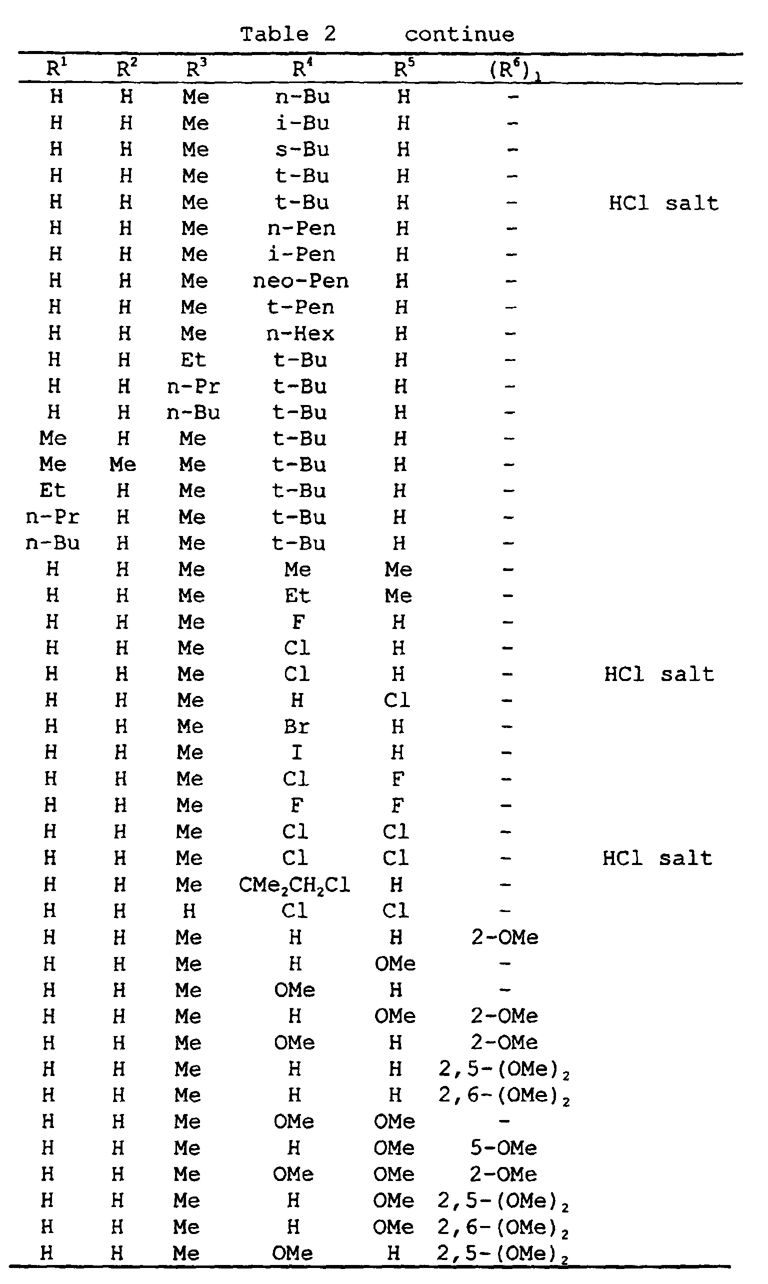

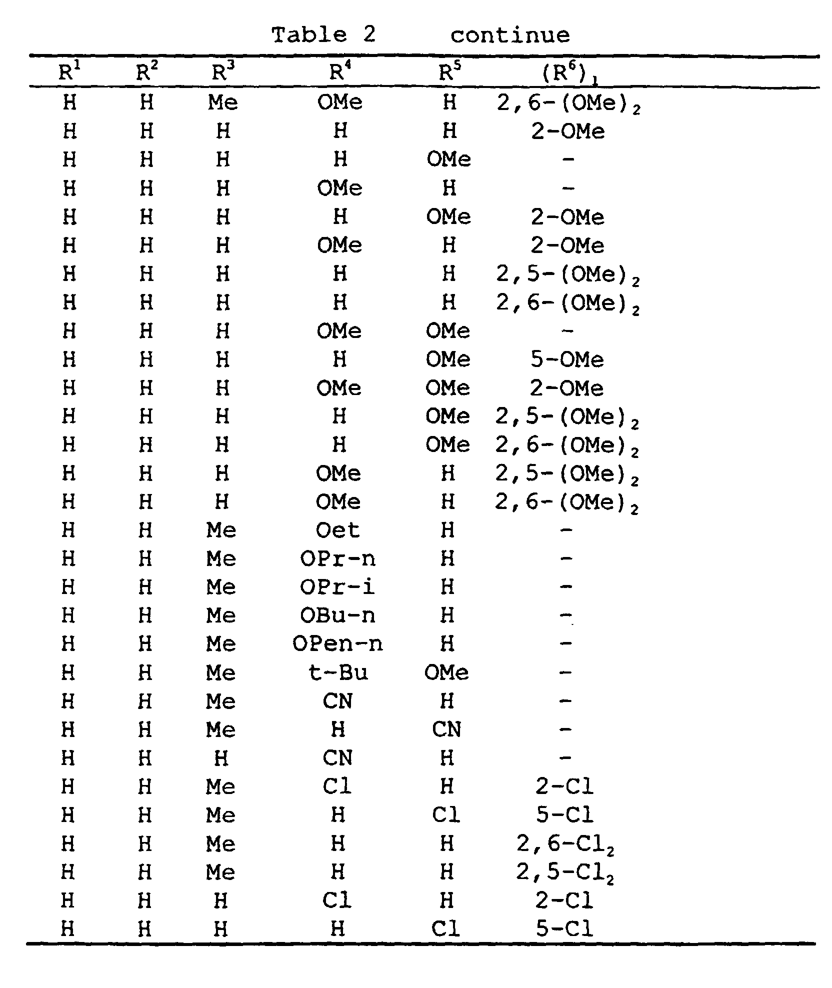

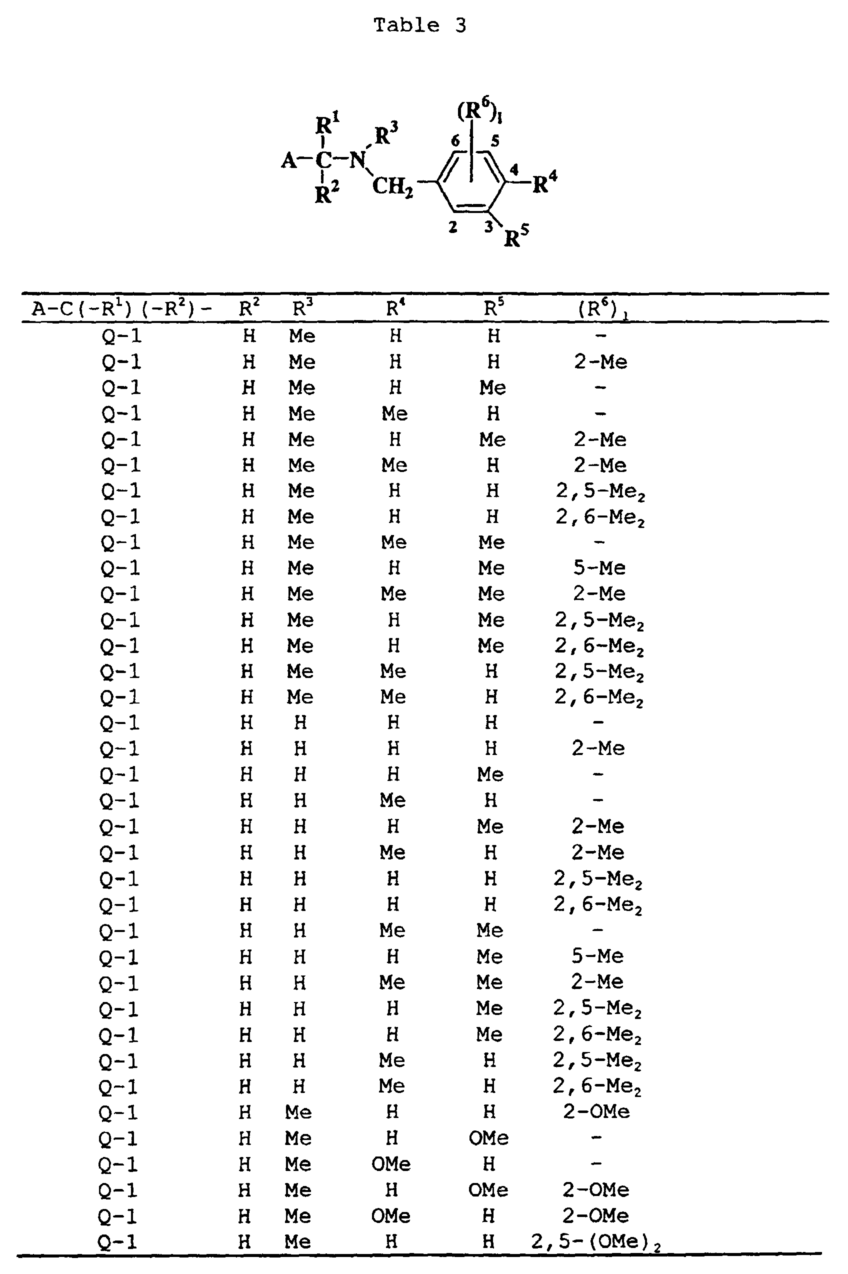

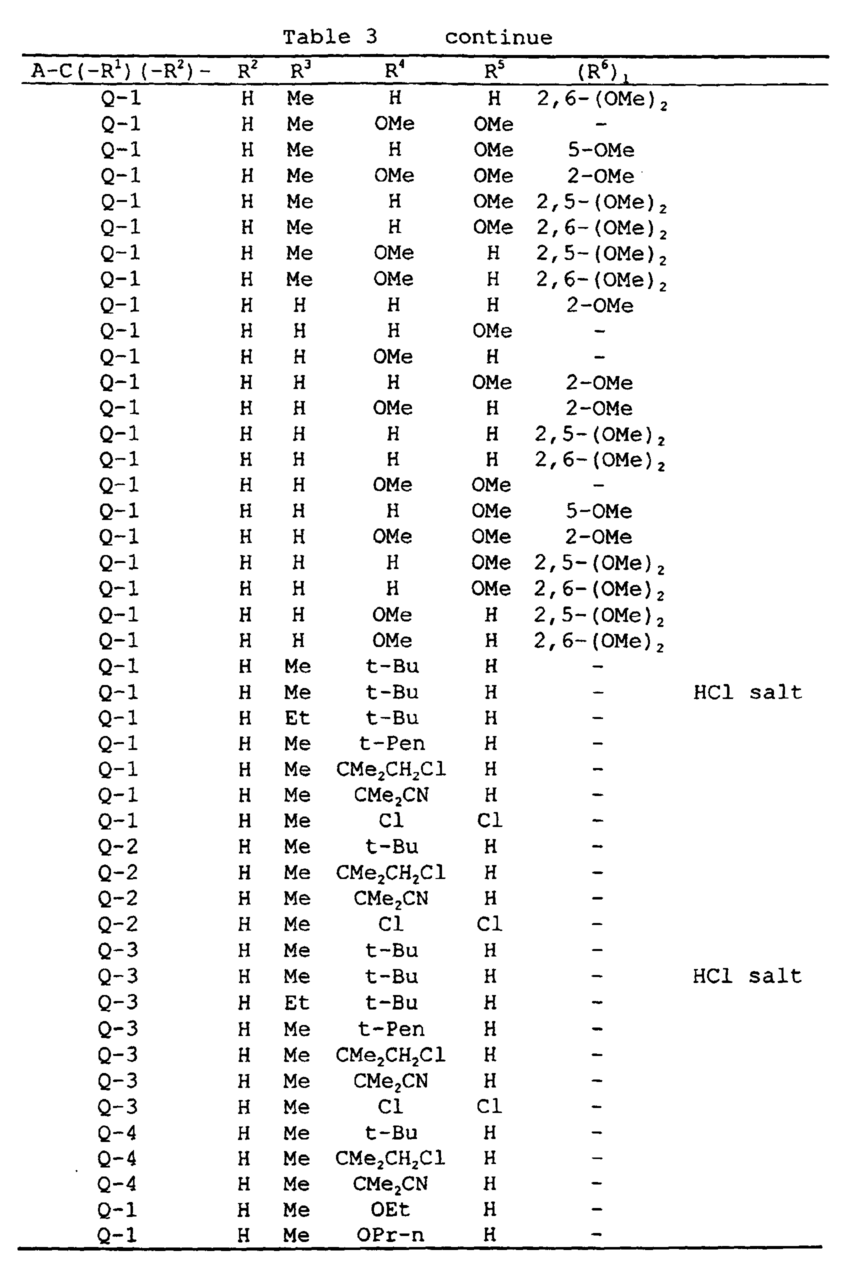

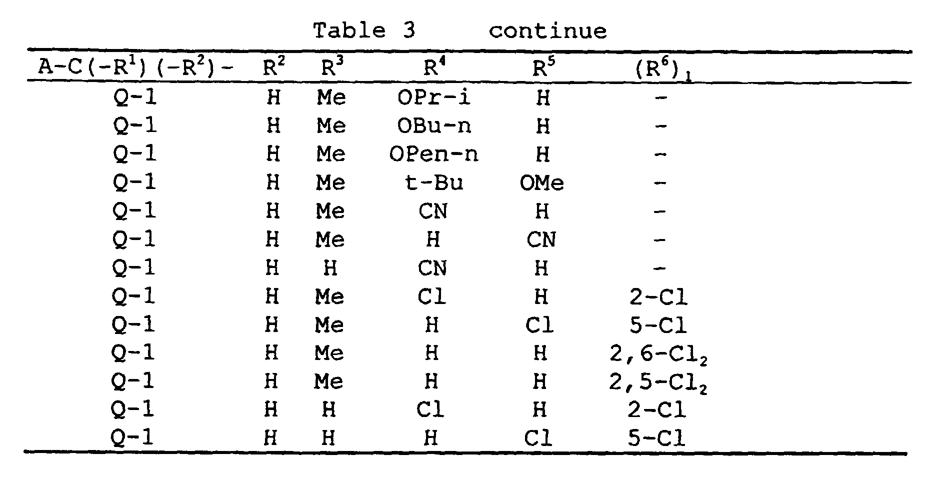

The benzylamines of the present invention can be synthesized by usual methods referring to Japanese Patent Application Laid-open Nos. Sho 64-6242 and Sho 61-45.

The benzylamines of the present invention may be used alone as an active ingredient. Alternatively, when the industrial antibacterial and antifungal agent, the algicide or the agent for preventing adhesion of organisms of the present invention are used, they may be used as mixed agent by further adding thereto one or more known industrial antibacterial and antifungal agents, algicides or agents for preventing adhesion of organisms.

Typical examples of them are given below, however, they are not limited to these;
cuprous oxide, quaternary ammonium compounds, allylisothiocyanate, 2-amino-3-chloro-1,4-naphthoquinone, ethylene-bis-thiocyanate, 2-n-octyl-3-isothiazolone, glutaraldehyde, 5-chloro-2-n-decyl-3-isothiazolone, 5-chloro-2,4-difluoro-6-methoxyisophthalonitrile, 2-chloro-4-methylamino-6-isopropylamino-s-triazine, 5-chloro-2-methyl-3-isothiazolone, 2,3-dichloro-1,4-naphthoquinone, diiodomethyl-p-tolylsulfone, N,N-dimethyl-N'-phenyl-N'-(fluorodichloromethylthio)sulfamide, N-(3,4-dichlorophenyl)-N'-methylurea, N,N-dimethyl-N'-(3,4-dichlorophenyl)urea, zinc dimethyldithiocarbamate, 2,6-dichloro-3,5-dicyano-4-phenylpyridine, 2,4-dichloro-6-(o-chloroanilino)-s-triazine, 4,5-dichloro-2-(4-chlorobenzyl)-3-isothiazolone, 4,5-dichloro-2-(4-chlorophenyl)-3-isothiazolone, 4,5-dichloro-2-n-hexyl-3-isothiazolone, 4,5-dichloro-2-n-octyl-3-isothiazolone, 1,2-dibromo-2,4-dicyanobutane, 2,2-dibromo-3-nitrilopropionamide, 2-thiocyanomethylthiobenzothiazole, 2-(4-thiazolyl)benzimidazole, thiabendazole, tetrafluoroisophthalonitrile, 2,3,5,6-tetrachloro-4-(methylsulfonyl)pyridine, tetraphenyl borane pyridine salts, tetramethylthiuramdisulfide, tetraethylthiuramdisulfide, tetraisopropylthiuramdisulfide, tetra-n-butylthiuramdisulfide, tetrachloroisophthalonitrile, tetrachlorophthalonitrile, Cu-10% Ni solid-solution alloy, N-trichloromethylthiotetrahydrophthalimide, N-trichloromethylthiophthalimide, 2,3,6-trichloro-4-propylsulfonylpyridine, N-(2,4,6-trichlorophenyl)maleimide, 4,5-trimethylene-2-methyl-3-isothiazolone, 2-pyridinethiol-1-oxide zinc salts, 2,3,3-triiodoallylalcohol, N-(fluorodichloromethylthio)phthalimide, bis-dimethyldithiocarbamoyl zinc ethylene-bis-dithiocarbamate, N-phenethyldichloromaleimide, 2-bromo-2-nitropropanediol, 5-bromo-5-nitro-1,3-dioxane, bromochlorodimethylhydantoin, N-benzyldichloromaleimide, 1,2-benzisothiazolin-3-one, 2-(methoxycarbonylamino)benzimidazole, 4-methyl-5-chloro-2-n-octyl-3-isothiazolone, 2-methylthio-4-t-butylamino-6-cyclopropylamino-s-triazine, N-2-methyl-6-ethylphenyldichloromaleimide, 2-methyl-3-isothiazolone, methylene-bis-thiocyanate, 3-iodo-2-propynylbutylcarbamate, iodopropargylbutylcarbamate.

Further, the benzylamines used as an active ingredient in the present invention may be a single compound or a mixture of several kinds of benzylamines.

The benzylamines used as an active ingredient in the present invention may be added alone to a system of the above application purpose. They may also be formulated in a mixture of an active ingredient and an appropriate carrier or solvent as required, or in an aqueous emulsion or dispersion.

When the formulations of the industrial antibacterial and antifungal agent, the algicide and the agent for preventing adhesion of organisms of the present invention are given an outline in the application field of industrial antibacterial and antifungal agents and algicides, the benzylamines used as an active ingredient in the present invention are mixed with appropriate carriers and additives, for example, a surfactant, binder and stabilizer etc., and formulated into wettable powder, emulsifiable concentrate, sol (flowable) formulation and other appropriate formulations by commonly used methods.

In the case of the preparation of these formulations, the benzylamines as an active ingredient have no upper limit of concentration as far as wettable powder, emulsifiable concentrate, liquid formulation, sol formulation and other appropriate formulations can be prepared. However, the benzylamine compound is generally contained in an amount of 1 to 90 wt%, preferably 3 to 40 wt% based on the weight of the formulations.

The carrier which can be used are either solid or liquid, which are commonly used in industrial antibacterial and antifungal agents and algicides, and is not limited to a particular kind.

Examples of the solid carrier include mineral powders such as kaolin, bentonite, clay, montmorillonite, diatomaceous earth, mica, vermiculite, gypsum, calcium carbonate, phosphorus lime, white carbon, slaked lime, quartz sand, ammonium sulfate and urea, plant powders such as soybean meal, starch, crystalline cellulose, alumina, silicate, sugar polymer, highly dispersible silicic acid and wax.

Examples of the liquid carrier include water, alcohol such as methyl alcohol, ethyl alcohol, n-propyl alcohol, isopropyl alcohol, ethyleneglycol and benzyl alcohol, aromatic hydrocarbons such as benzene, toluene, xylene, ethylbenzene, chlorobenzene, cumene and methylnaphthalene, halogenated hydrocarbons such as chloroform, dichloromethane and ethylenedichloride, ethers such as ethylether, dioxane and tetrahydrofuran, ketones such as acetone, methylethylketone, cyclohexanone and methylisobutylketone, esters such as ethylacetate, butylacetate, ethyleneglycolacetate and amylacetate, nitriles such as acetonitrile, propionitrile and acrylonitrile, sulfoxides such as dimethylsulfoxide, alcoholethers such as ethyleneglycol monomethylether and ethyleneglycol monoethylether, amines such as triethylamine, aliphatic and alicyclic hydrocarbons such as n-hexane and cyclohexane and the like, and further industrial gasoline (petroleum ether, solvent naphtha, etc.), petroleum fractions (paraffin, kerosene, light oil, etc.) and the like.

In the case of formulation of an emulsifiable concentrate, a wettable powder and a sol (flowable) formulation and so on, a surfactant is blended for emulsifying, dispersing, solubilizing, wetting, foaming or spreading it. Examples of the surfactant are given below but it is not limited to these.

Examples of nonionic surfactants include polyoxyethylene alkyl ethers, polyoxyethylene alkyl esters, polyoxyethylene sorbitan alkyl esters and sorbitan alkyl esters.

Examples of anionic surfactants include alkyl benzene sulfonates, alkylsulfosuccinates, alkylsulfates, polyoxyethylene alkylsulfates, aryl sulfonates and lauryl sulfates.

Examples of cationic surfactants include alkylamines (lauryl amine, stearyl trimethylammonium chloride, alkyl dimethylbenzylammonium chloride, etc.).

Examples of ampholytic surfactants include carboxylic acid (betaine type) sulfuric acid esters.

Besides these, a thickener such as polyvinyl alcohol (PVA), carboxylmethyl cellulose (CMC), arabian rubber, polyvinyl acetate, gelatin, casein, sodium alginate, tragacanth gum, guargum, xanthane gum and hydroxypropyl cellulose and various additives may be blended.

If necessary, a stabilizer such as an antioxidant or ultraviolet absorber may be further added in an appropriate amount.

The industrial antibacterial and antifungal agent and the algicide containing benzylamines of the present invention as an active ingredient can be used for the following purposes: inhibition of growth of bacteria, fungi and algae in emulsion products such as water paints, adhesives, latexes and acryls, slurry products such as starch, pigments and calcium carbonate and joint cement; preservation of wood in construction materials (for building construction materials and civil engineering construction materials); antisepsis of cutting oil; fungusproofing of surfactants; sterilization and prevention of formation of slime in the cooling towers of the production equipment of plants and building air conditioning systems and in pulp and paper plants; antibacterial and antifungal treatments of fibers, fabrics and leathers by spraying or immersing; protection from the attack of microbes, fungi and algae to coating films, particularly coating films of exterior coatings during which are exposed to the weather; protection from bacteria, fungi and algae of interior and exterior materials (for housings and medical facilities), building materials (for construction and civil engineering materials, etc.), home electric appliances, domestic sundries and sport goods, which are made from resins such as vinylchloride, polyurethane, polyethylene, polypropylene, silicon, modified silicon, nylon, epoxy and the like; prevention of accumulation of slime in cane and beet sugar production equipment; prevention of accumulation of microbes in air washers, scrubber systems and industrial fresh water supply systems; maintenance of sanitary environment at food plants and the like; deodorization and sterilization for washing production equipment, sewage treatment plants and night soil treatment plants; prevention of pollution and accumulation of microbes in petroleum well cutting oil, muddy water and secondary oil recovery process; prevention of growth of bacteria and fungi in paper coating materials and coatings thereof; prevention of pollution by microbes of cosmetics and toiletry products; inhibition of growth of algae in swimming pools and the like; prevention of pollution by microbes of agricultural blends, electrodeposition systems, diagnostic and pharmaceutical products, medical equipment and the like; and prevention of accumulation of microbes in photographic treatments.

The agent for preventing adhesion of organisms containing the benzylamines as an active ingredient can be used to prevent the adhesion of harmful aquatic organisms such as shellfishes exemplified by blue mussel (*Mytilus edulis*), barnacle (*Balanus sp.*), oyster, *Hydrozoa*, hydra (*Hydra sp.*), serpula (*Serpula sp.*), ascidian, bryzoan and pondsnail, and algae exemplified by *Ulva pertusa*, *Enteromorpha intestinalis* and *Spirogyra arcta* to fishing nets, bottoms of ships, equipment placed in the sea such as buoys, marine constructions, condensers of cooling water systems at thermal or atomic power plants, inlet channels of cooling water for heat exchangers of the chemical industry, under water constructions such as equipment attached to dam, reservoirs and the like.

Examples of formulation in the case that the benzylamines of the present invention is used as an industrial antibacterial and antifungal agent and an algicide are given below with the compound of the invention. The proportions of active ingredients and the types and amounts of carriers and additives are not limited to these.

### Formulation example 1 (emulsifiable concentrate)

| Components | wt% |
|---|---|
| Compound of the invention | 5 |
| Dimethyl sulfoxide | 85 |
| Methyl isobutyl ketone | 5 |
| Sorpol 800A (emulsifying agent of Toho Kagaku Co.) | 5 |
| | 100 |

An emulsifiable concentrate containing 5 % of active ingredient was obtained by mixing and melting the above ingredients.

### Formulation example 2 (wettable powder)

| Components | wt% |
|---|---|
| Compound of the invention | 20 |
| Lauryl sulfate | 7 |
| Clay | 73 |
| | 100 |

Wettable powder containing 20 % of active ingredient was obtained by mixing and milling the above ingredients uniformly.

### Formulation example 3 (flowable formulation)

| Components | wt% |
|---|---|
| Compound of the invention | 20 |
| Lauryl sulfate | 2 |
| Xanthane gum | 2 |
| Hydroxypropyl cellulose | 1 |
| Distilled water | 75 |
| | 100 |

A flowable formulation containing 20 % of active ingredient was obtained by placing the above ingredients in a ball mill to mill and mix for 12hours.

The formulated industrial antibacterial and antifungal agent and algicide of the present invention may be used in accordance with methods of use of industrial antibacterial and antifungal agent and algicide which have been generally performed, including that formulations are added to and mixed with various industrial raw materials or products directly or after they are diluted with water or an appropriate organic solvent, that they are applied or sprayed onto the surfaces of various industrial raw materials and products, or that industrial raw materials and products are immersed in a diluted solution of the industrial antibacterial and antifungal agent and algicide of the present invention. However, they are not limited to these specific methods.

When the formulations of the industrial antibacterial and antifungal agent, the algicide and the agent for preventing adhesion of organisms of the present invention are outlined in the application field of agents for preventing adhesion of organisms, the benzylamines used as an active ingredient in the present invention may be prepared in the form of a paint, solution, emulsion and so on.

General formulation can be employed for the preparation of the paint, solution, emulsion and so on.

When the agent for preventing adhesion of organisms of the present invention is used in the form of an antifouling paint, adhesion and propagation of aquatic organisms can be avoided by, for example, mixing benzylamines as an active ingredient and a film forming ingredient to prepare a paint and then applying it to bottoms of ships, marine constructions, intake channels for cooling, underwater constructions and the like.

Oil varnish, synthetic resins, artificial rubber and the like are used as the film forming ingredients.

Solvents, pigments and the like may be further used as required.

In the case of preparation of paint, the benzylamines as an active ingredient have no upper limit of concentration as far as it can form a coating film. However, it is used in an amount of 1 to 50 wt%, preferably 5 to 20 wt% based on the weight of the antifouling coating.

Examples of formulation in the case that the agent for preventing adhesion of organisms of the present invention is used as an antifouling paint are given below with the compound of the invention; however, it is not limited to these.

### Formulation example 4

| Components | wt% |
|---|---|
| Compound of the invention | 8 |
| VYHH (vinyl-based synthetic resin of UCC Co.) | 7 |
| Rosin | 7 |
| Tricresyl phosphate | 3 |
| Talc | 20 |
| Barium sulfate | 15 |
| Red iron oxide | 10 |
| Xylene | 20 |
| Methyl isobutyl ketone | 10 |
| | 100 |

### Formulation example 5

| Components | wt% |
|---|---|
| Compound of the invention | 5 |
| CR-10 (chloride rubber resin of Asahi Denka Co.) | 13 |
| Zinc oxide | 20 |
| Talc | 20 |
| Plasticizer | 2 |
| Red iron oxide | 10 |
| Xylene | 30 |
| | 100 |

When the agent for preventing adhesion of organisms of the present invention is used in the form of a solution, the adhesion and propagation of aquatic organisms can be avoided by, for example, dissolving the benzylamines as an active ingredient and a film forming ingredient in a solvent to prepare a solution, and applying it to a culturing net or fixed shore net.

A synthetic resin, an artificial rubber, a natural resin or the like are used as the film forming ingredient and xylene, toluene, cumene, methyl ethyl ketone, methyl isobutyl ketone, acetone and the like are used as the solvent.

An additive such as a plasticizer may be further used as required.

In the case of preparation of a solution, the benzylamines as an active ingredient have no upper limit of concentration as far as a solution can be formed. However, it is generally used in an amount of 1 to 50 wt%, preferably 5 to 30 wt% based on the weight of the solution.

Examples of formulation in the case that the agent for preventing adhesion of organisms of the present invention is used as a solution are given below with the compound of the invention. However, it is not limited to these.

### Formulation example 6

| Components | wt % |
|---|---|
| Compound of the invention | 15 |
| Acrylic resin (50% xylene solution) | 50 |
| Xylene | 35 |
| | 100 |

### Formulation example 7

| Components | wt% |
|---|---|
| Compound of the invention | 10 |
| Acrylic resin (50% xylene solution) | 40 |
| Di-tert-nonyl pentasulfide | 5 |
| Liquid paraffin | 5 |
| Xylene | 40 |
| | 100 |

When the agent for preventing adhesion of organisms of the present invention is used in the form of an emulsion, a desired emulsion can be prepared by adding a surfactant to a solution of the benzylamines as an active ingredient in accordance with a general method which has normally used to prepare an emulsion. The surfactant which can be used is not limited to a particular kind.

The prepared emulsion can be used though kneading into a raw material such as a polymer resin for culturing nets and fixed shore nets used in the sea or underwater.

In the case of preparation of an emulsion, the benzylamines as an active ingredient have no upper limit of concentration as far as an emulsion can be formed. However, it is generally used in an amount of 1 to 50 wt%, preferably 3 to 30 wt% based on the weight of the emulsion.

The above solution or emulsion of the present invention may be added to service water, reservoir water and the like to prevent the adhesion and propagation of aquatic organisms in the intake channels of cooling water or reservoirs.

### Best Mode for carrying out the Invention

Hereafter, the present invention will be described more concretely and detailed by Examples using the described Compound 1 to Compound 32. However, the present invention is not limited thereto. (Compound 1 to Compound 32 were synthesized according to the methods described in Japanese Patent Application Laid-open Nos. Sho 64-6242 and Sho 61-45.)

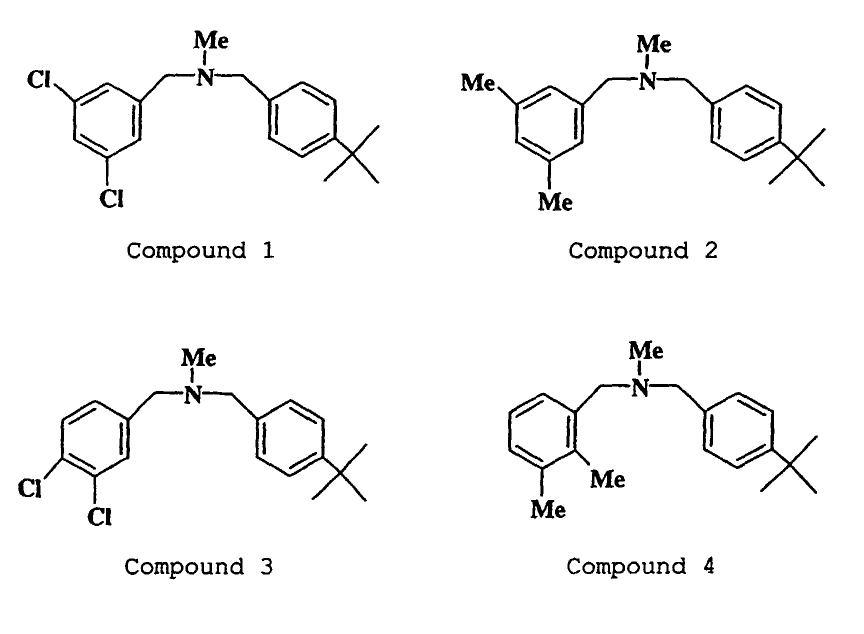

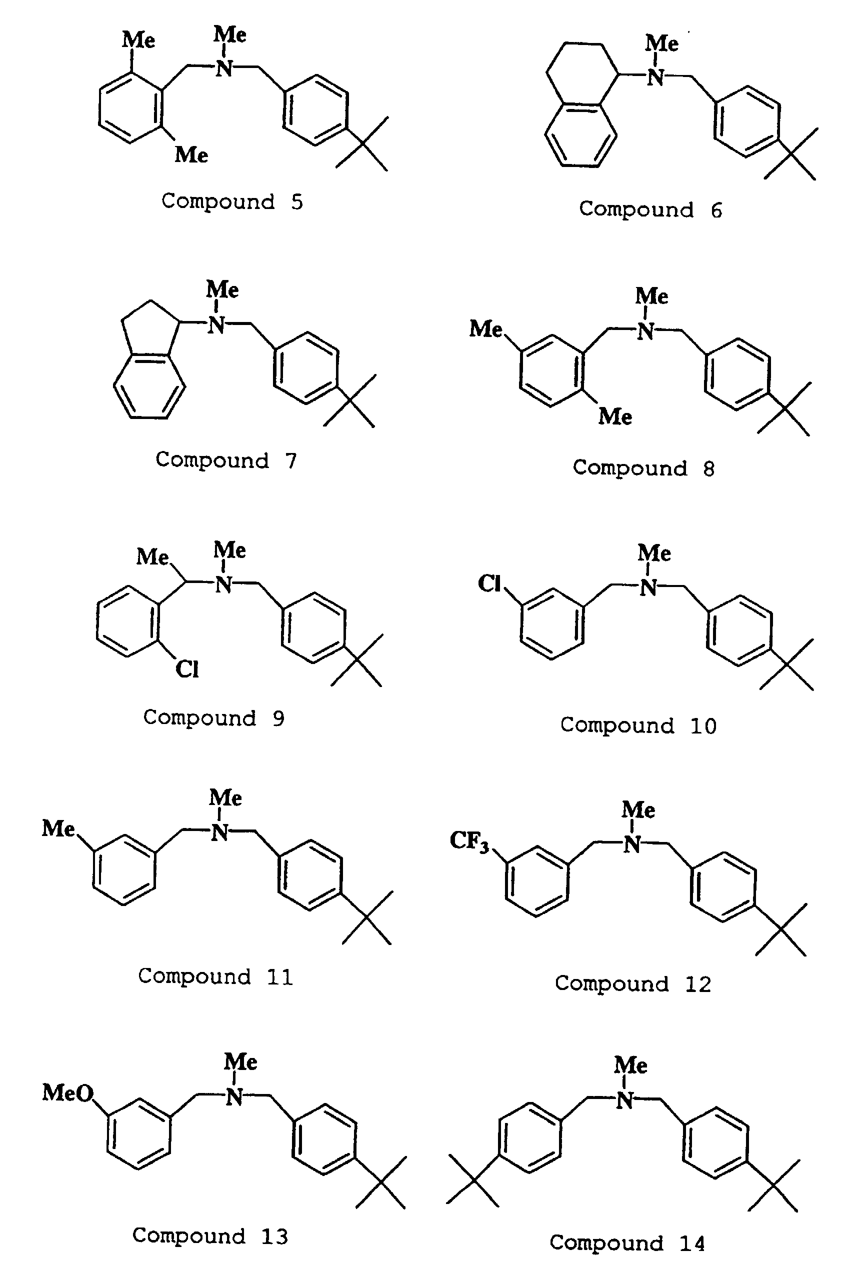

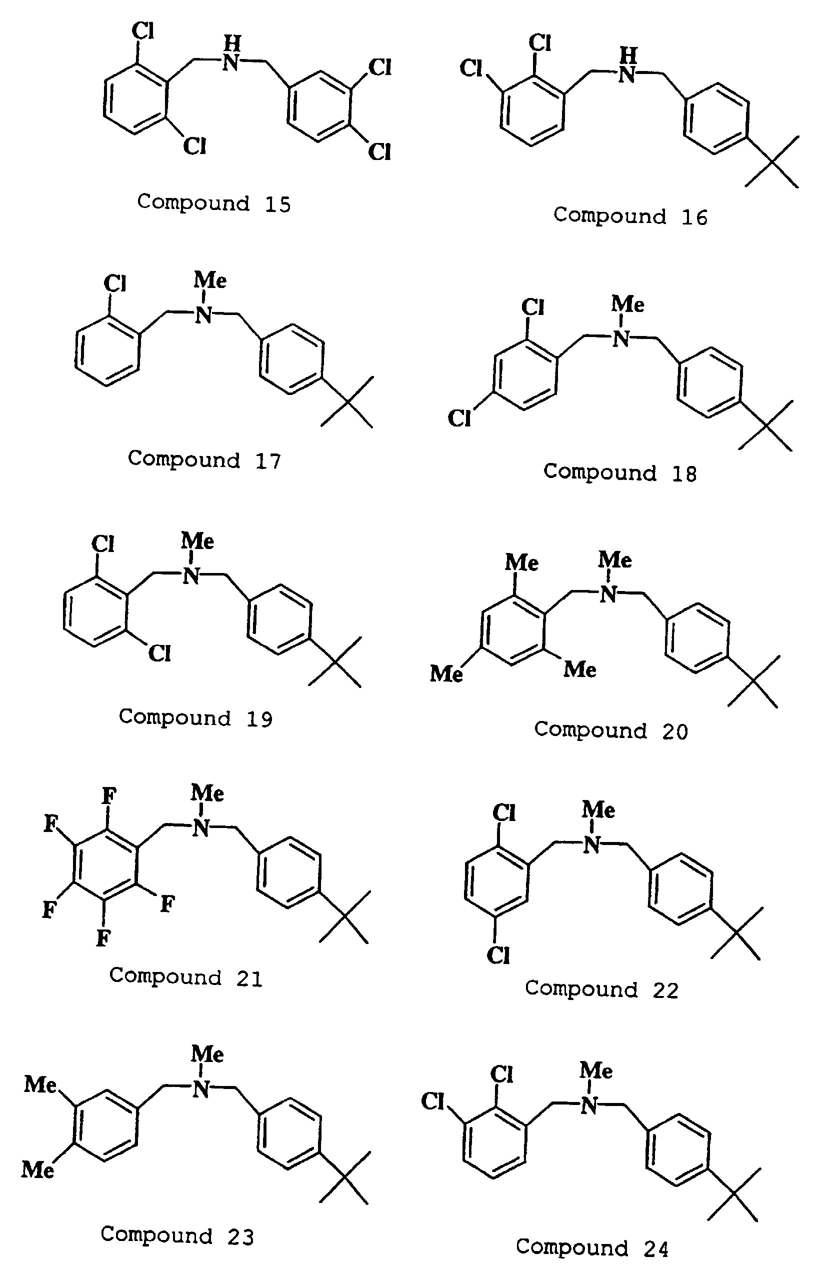

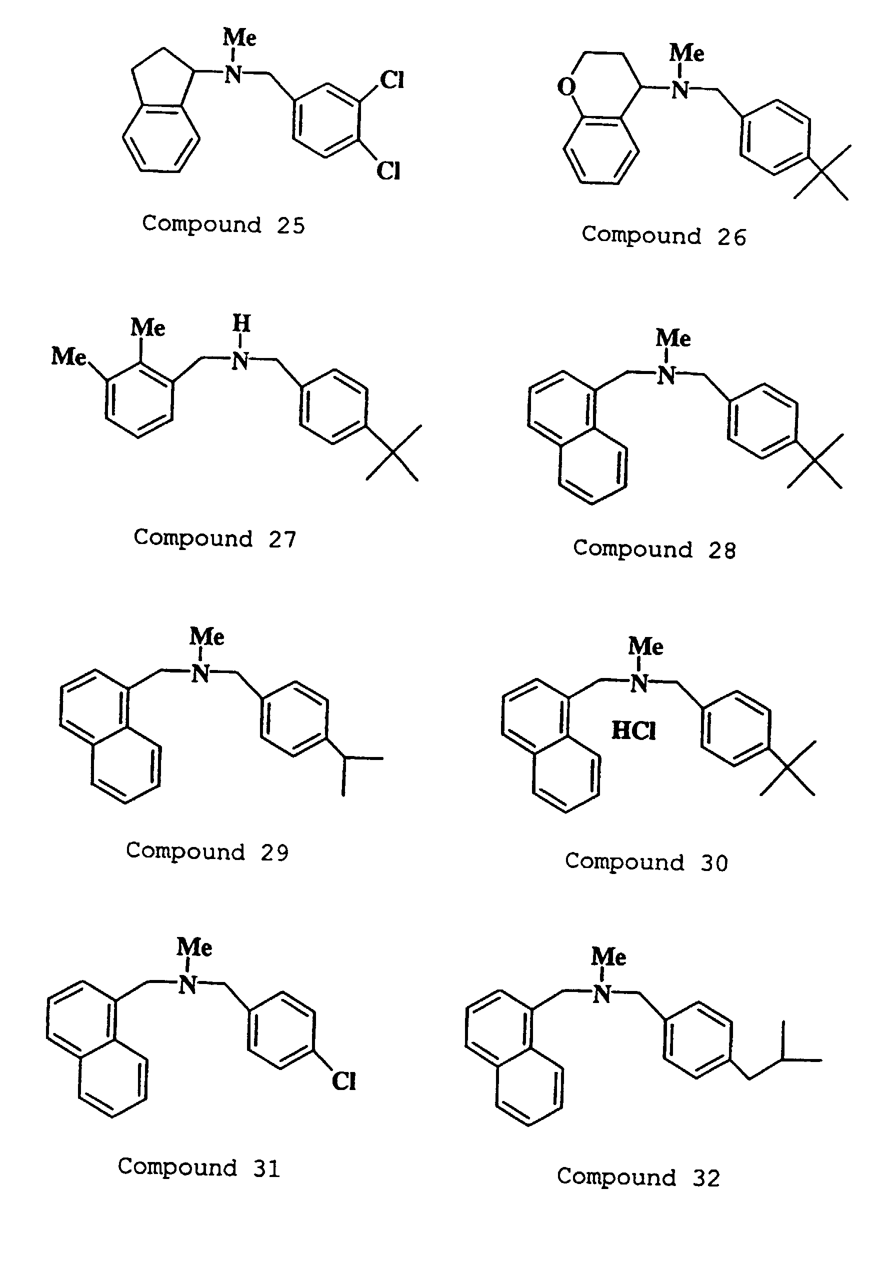

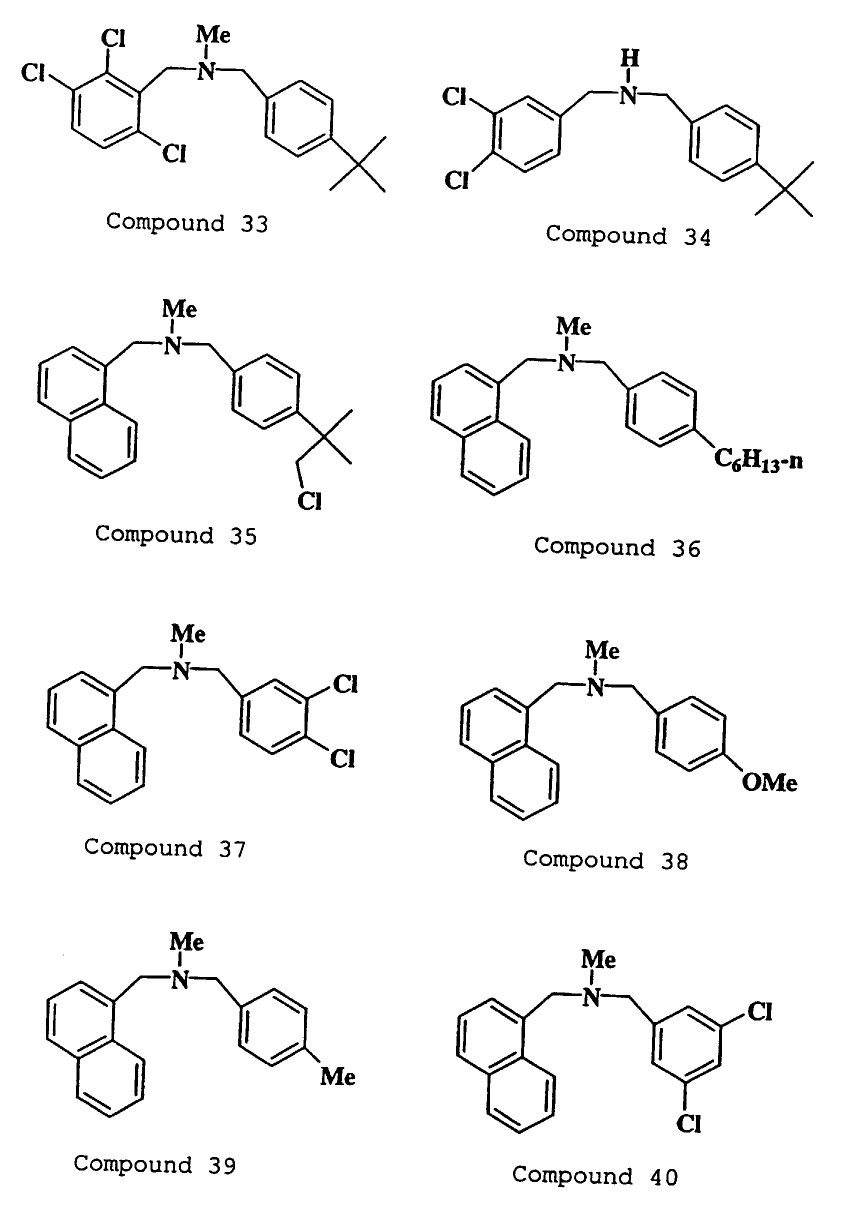

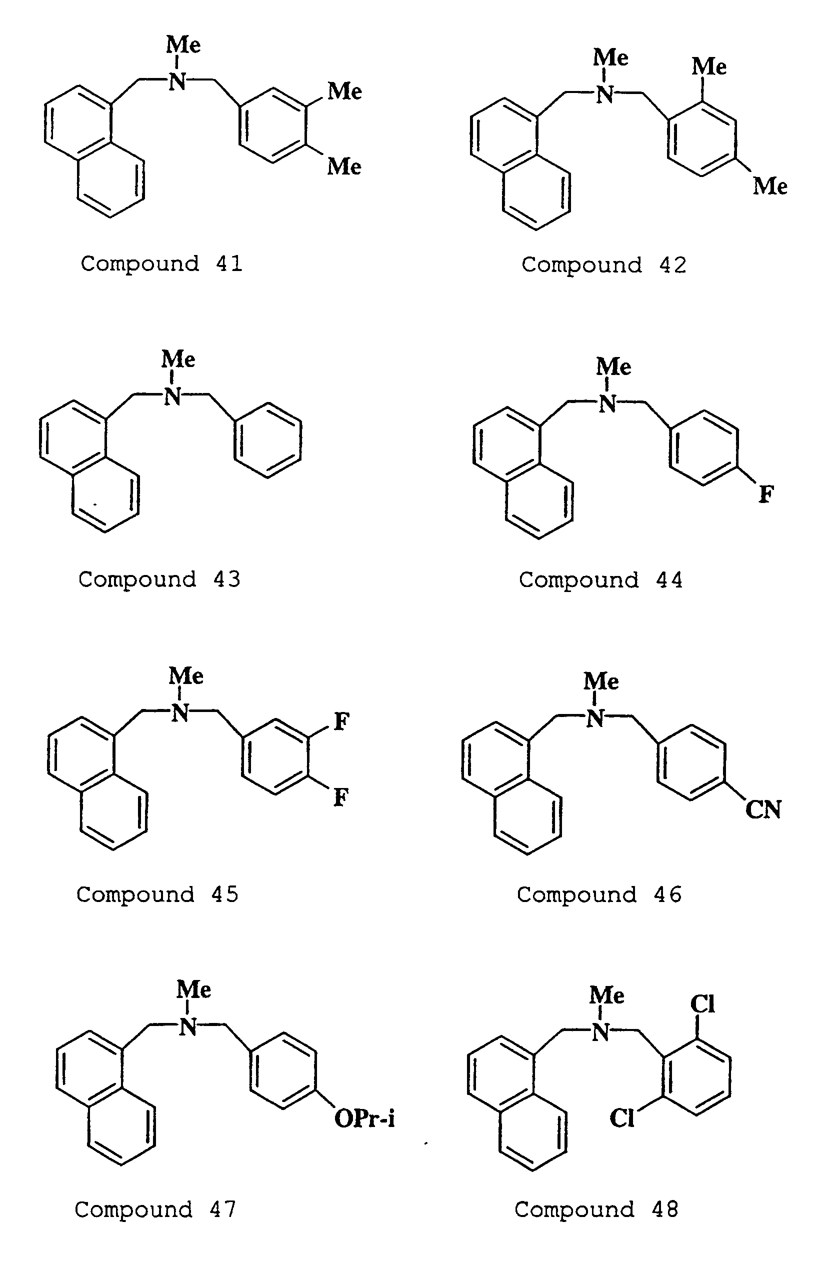

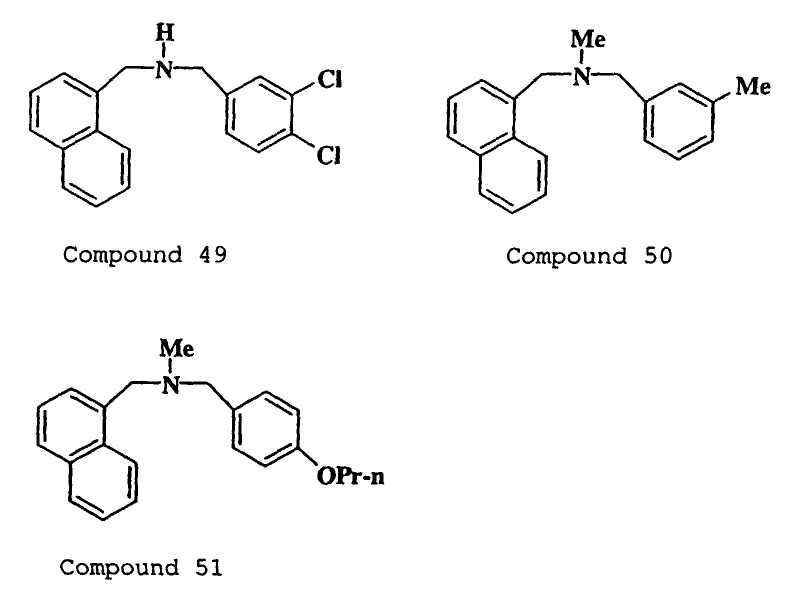

### Example 1 (evaluation of antifungal activity)

31.3 ml of *Trichophyton mentagrophytes* to be tested was added to 125 ml of a potato dextrose agar culture medium (Nissui Seiyaku Co.). The medium was stirred not to foam the solutions, poured into plates uniformly and solidified.

Thereafter, predetermined amounts of the compounds of the invention were weighted and diluted with acetone to predetermined concentrations.

Paper disks were impregnated with samples containing predetermined amounts of the compounds of the invention, laid on a filter, dried with air and placed on a plate containing test microbe at equal intervals.

*Trichophyton mentagrophytes* was cultured at 28 °C for 3 days in a thermostatic chamber and the diameter of each inhibiting zone was measured to evaluate the activity of each compound. Results obtained with samples having a concentration of 100 ppm are shown in Table 4. Symbols in the table mean the followings;
A: *Trichophyton mentagrophytes*,
++: strongly inhibiting zone (equal to or more than 21 mm) is observed,
+: inhibiting zone (10 to 20 mm) is observed,
-: no inhibiting zone is observed.

**Table 4**

| Compound No. | Judgment |
|---|---|
| | (Target bacteria: A) |
| 1 | ++ |
| 2 | ++ |
| 3 | + |
| 4 | ++ |
| 5 | ++ |
| 6 | ++ |
| 7 | ++ |
| 8 | ++ |
| 9 | ++ |
| 10 | ++ |
| 28 | ++ |
| 29 | ++ |
| 30 | ++ |
| 31 | + |

### Example 2 (evaluation of antibacterial and antifungal activities)

Series of diluted samples (20000, 10000, 5000, 2500, 2000, 1250, 625, 313, 156, 78, 39, 20, 10, 5, 2.5, 1.25 mg/l) of the compounds of the invention were prepared using dimethylsulfoxide. A sensitive culture medium-N (Nissui Seiyaku Co.) was used for bacteria and a potato dextrose agar culture medium (Nissui Seiyaku Co.) was used for fungi. 0.5 ml of each sample was added to and mixed with 9.5 ml of the culture medium, poured into a Petri dish and solidified to obtain a plate. As a result, the concentration of the compounds of the invention in the agar culture medium were 1000, 500, 250, 125, 100, 62.5, 31.3, 15.6, 7.8, 3.9, 2.0, 1.0, 0.5, 0.25, 0.125, 0.062 mg/l. The bacterium inoculated were cultured in a bouillon for the assay of sensitivity (Nissui Seiyaku Co.) at 37 °C for 20 hours, and the fungi were cultured in the potato dextrose agar culture medium (Nissui Seiyaku Co.) for 10 days and then a 10⁶ CFU/ml suspension was prepared from each of them. A test bacteria or fungi suspension was streaked on an agar plate containing the compound of the present invention with platinum wire loop, and the agar plate was cultured at 37±1 °C for 18 to 20 hours for bacteria or at 27 °C for 7 days for fungi. A concentration at which no growth was seen was taken as minimum inhibitory concentration [MIC(mg/l)]. Results are shown in Table 5. Symbols in the table mean the followings;
A: *Bacillus subtilis*,
B: *Trichophyton mentagrophytes*,
C: *Rhodotorula mucilaginosa*.

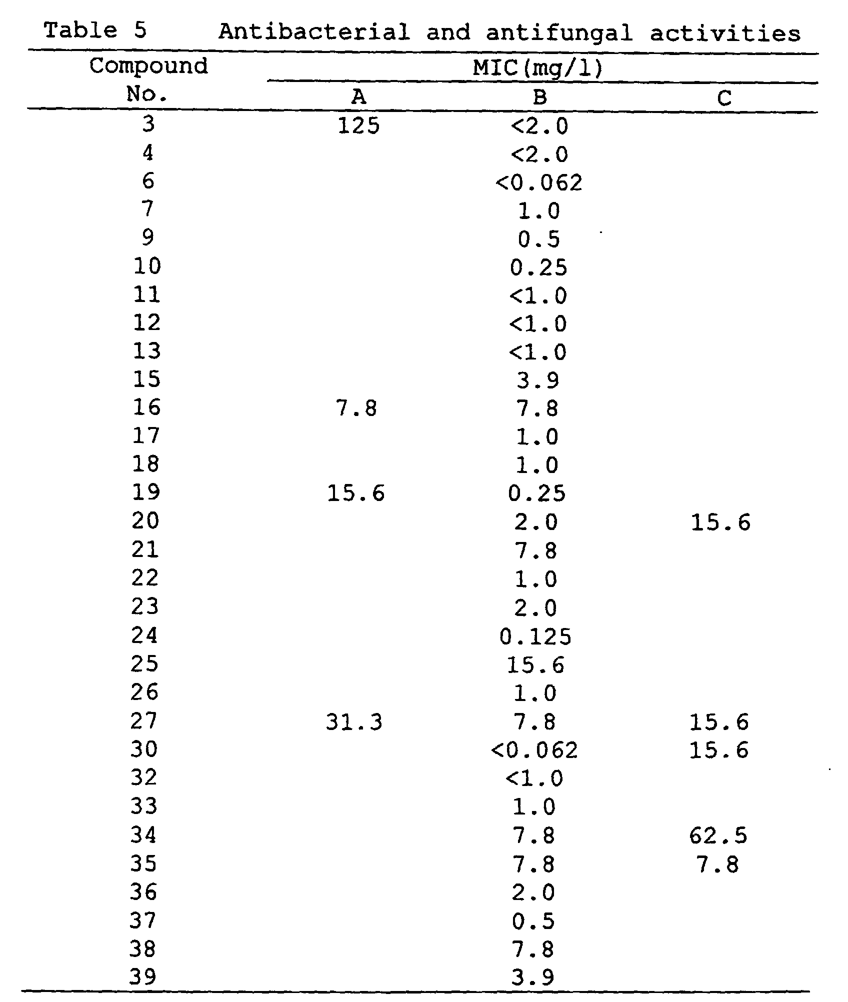

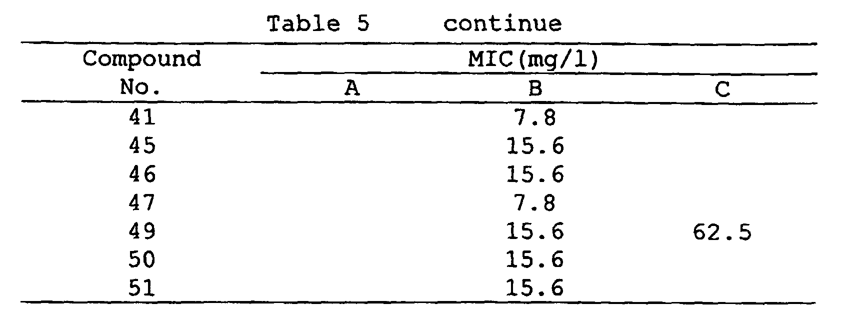

### Example 3 (evaluation of antibacterial and antifungal activities)

Series of diluted samples (20000, 10000, 5000, 2500, 1250, 625, 313, 156, 78, 39 mg/l) of the compounds of the invention were prepared using dimethylsulfoxide. A sensitive culture medium-N (Nissui Seiyaku Co.) was used for bacteria and a potato dextrose agar culture medium (Nissui Seiyaku Co.) was used for fungi. 0.5 ml of each sample was added to and mixed with 9.5 ml of the culture medium, poured into a Petri dish and solidified to obtain a plate. As a result, the concentration of the compounds of the invention in the agar culture medium were 1000, 500, 250, 125, 62.5, 31.3, 15.6, 7.8, 3.9, 2.0 mg/l. The bacterium inoculated were cultured in a bouillon for the assay of sensitivity (Nissui Seiyaku Co.) at 37 °C for 20 hours, and the fungi were cultured in the potato dextrose agar culture medium (Nissui Seiyaku Co.) for 10 days and then a 10⁶ CFU/ml suspension was prepared from each of them. A test bacteria or fungi suspension was streaked on an agar plate containing the compound of the present invention with platinum wire loop, and the agar plate was cultured at 37±1 °C for 18 to 20 hours for bacteria or at 27 °C for 7 days for fungi. A concentration at which no growth was seen was taken as minimum inhibitory concentration (MIC). Results are shown in Table 6 and Table 7. Symbols in the tables mean the followings;
A: *Bacillus subtilis*,
B: *Trichophyton mentagrophytes*,
C: *Staphylococcus aureus*,
D: *Aspergillus niger*,
E: *Penicillium funiculosum*,
F: *Candida albicans*,
G: *Micrococcus luteus*,
H: *Corynebacterium aquaticum*,
I: *Chaetomium globosum*,
J: *Fusarium moniliforme*,
K: *Saccharomyces cerevisiae*,
L: *Rhodotorula rubra*,
M: *Cladosporium cladosporioides*,
N: *Alternaria alternata*.

**Table 6**

| Antibacterial and antifungal activities | | | | | | | |
|---|---|---|---|---|---|---|---|
| Compound No. | MIC (mg/l) | | | | | | |
| | A | B | C | D | E | F | G |
| 2 | | <2.0 | | 125 | 31.3 | | |
| 3 | 125 | <2.0 | 125 | | | | |
| 4 | | <2.0 | | 15.6 | 15.6 | 62.5 | |
| 5 | | | | <2.0 | 15.6 | | |
| 7 | | <2.0 | | | | | |
| 8 | | | | 7.8 | 31.3 | | |
| 16 | 7.8 | 7.8 | | 125 | 62.5 | 62.5 | |
| 20 | | | | 7.8 | 15.6 | | |
| 23 | | | | | 63 | | |
| 27 | | | | | | | 15.6 |
| 28 | | <2.0 | | <2.0 | <2.0 | | |

**Table 7**

| Antibacterial and antifungal activities | | | | | | | |
|---|---|---|---|---|---|---|---|
| Compound No. | MIC (mg/l) | | | | | | |
| | H | I | J | K | L | M | N |
| 2 | 31.3 | 31.3 | 63 | 63 | 125 | 125 | |
| 4 | 31.3 | 31.3 | 31.3 | 63 | 63 | 31.3 | 31.3 |
| 5 | 7.8 | 15.6 | 7.8 | 63 | 63 | 31.3 | 125 |
| 6 | 15.6 | | | 31.3 | | 125 | |
| 8 | 31.3 | 63 | | 125 | 125 | 63 | |
| 11 | 63 | 63 | | | | | |
| 12 | | 125 | | 125 | | | |
| 13 | 63 | | | | | | |
| 20 | 7.8 | 31.3 | 31.3 | 15.6 | 31.3 | | 15.6 |
| 23 | 31.3 | 125 | 125 | 125 | | 125 | |
| 27 | 7.8 | 63 | | 63 | 125 | 125 | 125 |

### Example 4 (evaluation of activity of inhibiting propagation of freshwater green alga)

A predetermined amount of each of the compounds of the invention was dissolved in a culture medium containing 10⁵ /ml of a freshwater green alga (*Selenastrum capricornutum*) at a logarithmic growth phase to prepare samples having a concentration of the compound of the invention in the medium of 500 ppb and 50ppb respectively. The samples were stationary cultured at 23±1 °C for 24 hours under continuous illumination.

After 72 hours, the number of cells was measured using a hemacytometer to obtain propagation rate. The propagation inhibiting rate was calculated from comparison with the non-treated lot. The results are shown in Table 8.

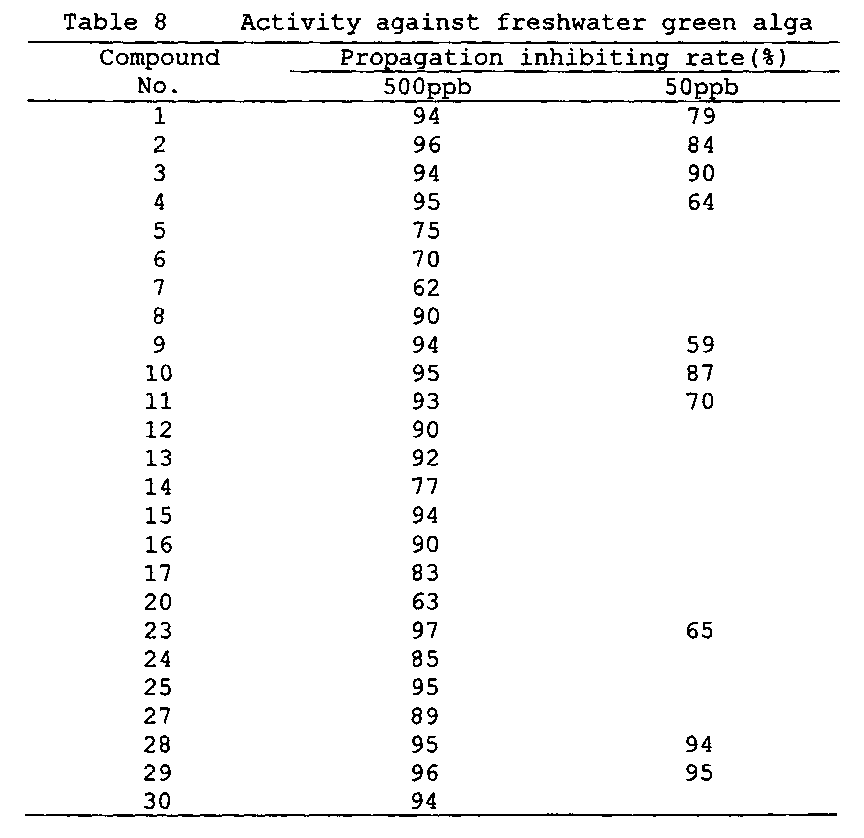

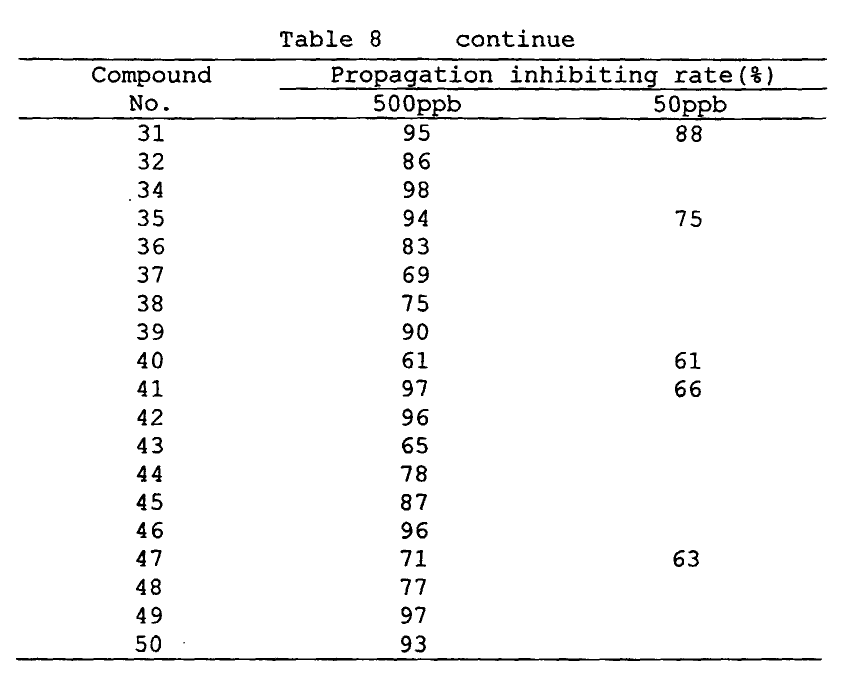

### Example 5 (evaluation of activity of inhibiting propagation of seawater diatom)

A predetermined amount of each of the compounds of the invention was dissolved in culture media containing 10⁵ /ml of a seawater diatom [*Nitzschia closterium*] at a logarithmic growth phase to prepare samples having a concentration of the compound in the medium of 500 ppb. The samples were stationary cultured at 22±1 °C for 24 hours under continuous illumination.

After 72 hours, cells were collected by centrifugation and disrupted by addition of methanol to extract chlorophyll, and the amount of chlorophyll was measured from absorbance using a spectrophotometer to obtain propagation rate. The propagation inhibiting rate was calculated from comparison with the non-treated lot. The results are shown in Table 9.

**Table 9**

| Activity against seawater diatom | |
|---|---|
| Compound No. | Propagation inhibiting rate(%) |
| | 500ppb |
| 4 | 70 |
| 7 | 91 |
| 16 | 80 |
| 27 | 90 |
| 29 | 76 |
| 34 | 100 |
| 48 | 77 |
| 49 | 100 |

### Example 6 (evaluation of activity of inhibiting propagation of freshwater algae)

A predetermined amount each of the compounds of the invention was dissolved in a culture medium containing 10⁵ /ml of a freshwater alga at a logarithmic growth phase to prepare samples having a concentration of the compound of the invention in the medium of 500 ppb and 50 ppb respectively. A shaking culture at 100 rpm was performed for 24 hours under continuous illumination at 20±2 °C for freshwater diatom and at 23±2 °C for other algae.

After 72 hours and 168 hours, the total volume of cells was measured using a hemacytometer to obtain propagation rate. The propagation inhibiting rate was calculated from comparison with the non-treated lot. The results are shown in Table 10 to Table 13. Symbols in the tables mean the followings;
A: freshwater green alga (*Chlorella pyrenoidosa*),
B: freshwater blue-green alga (*Microcystis aeruginosa*),
C: freshwater diatom (*Diatoma elongatum*),
D: freshwater green alga (*Scenedesmus pannonicus*).

**Table 10**

| Activity against A | | |
|---|---|---|
| Compound No. | Propagation inhibiting rate(%) | |
| | 500ppb | |
| | 72hr | 168hr |
| 5 | | 62 |
| 6 | | 79 |
| 8 | | 86 |
| 9 | 70 | |
| 32 | | 75 |

**Table 11**

| Activity against B | | |
|---|---|---|
| Compound No. | Propagation inhibiting rate(%) | |
| | 500ppb | |
| | 72hr | 168hr |
| 5 | 56 | 62 |
| 9 | 97 | 98 |
| 15 | 92 | 100 |
| 31 | 90 | 100 |

**Table 12**

| Activity against C | | | | |
|---|---|---|---|---|
| Compound No. | Propagation inhibiting rate(%) | | | |
| | 500ppb | | 50ppb | |
| | 72hr | 168hr | 72hr | 168hr |
| 9 | 76 | 100 | 88 | 94 |
| 31 | 81 | 95 | 61 | 87 |

**Table 13**

| Activity against D | | |
|---|---|---|
| Compound No. | Propagation inhibiting rate (%) | |
| | 500ppb | |
| | 72hr | 168hr |
| 2 | 91 | 99 |
| 5 | 76 | 78 |
| 7 | 92 | 99 |
| 8 | 72 | 86 |
| 9 | | 85 |
| 15 | 95 | 98 |
| 31 | | 79 |
| 32 | 83 | |

### Example 7 (evaluation of antifouling activity against blue mussel)

The compound of the invention was completely dissolved in 1 ml of acetone and the resulting solution was uniformly applied to a 4 cm-diameter zone drawn on a test plate. A zone coated with acetone alone as blank and zones coated with 1.0 mg and 0.5 mg of copper sulfate as a comparison chemical were also prepared. After drying, four blue mussel having a shell length of about 2 to 2.5 cm were adhered around each zone using a rubber piece as a spacer. The thus prepared test plate was immersed in a water tank to which seawater ran and left to stand in the dark for 3 hours.

The adhesion controlling effect (adhesion repellent activity) was obtained from comparison with copper sulfate used as a comparison chemical.

The evaluation of adhesion repellent activity was based on "Evaluation method of adhesion repellent substance to marine adhesion organisms using *Mytilus edulis*" written by Kazuo Ina and Hideo Etoh (Chemistry and Biology, vol.28 (No.2), pp.132-138, 1990).

The results are shown in Table 14.

Symbols in the table mean the followings;
++: not adhered in the zone and strong repellent effect is observed,
+: adhesion in zone is observed but most of them adhered out of zone and repellent effect is observed,
-: adhered in and out of zone alike and repellent effect is not observed.

**Table 14**

| Adhesion repellent activity against blue mussel | | |
|---|---|---|
| Compound No. | Amount of chemical (mg) | Judgment |
| 7 | 2.0 | ++ |
| Copper sulfate | 1.0 | + |
| | 0.5 | - |
| Blank | | - |

### Industrial Applicability

The benzylamines of the general formula (1) has high safety and exhibits a wide spectrum with a small amount, so that it is useful as an industrial antibacterial and antifungal agent, algicide or agent for preventing adhesion of organisms.

## Claims

1. An industrial antibacterial and antifungal agent characterized by containing the benzylamine of the general formula (1) 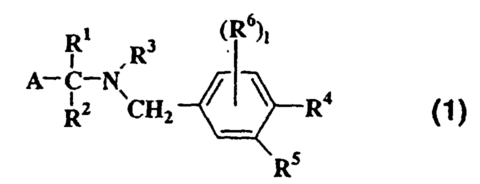 or acid addition salt thereof,
wherein
A is a group of the general formula (2) 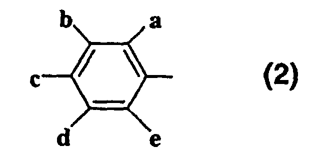 in which a, b, c, d and e are each independently a hydrogen atom, an alkyl having 1 to 4 carbon atoms, an alkoxy having 1 to 4 carbon atoms, a halogen atom or a halogenated alkyl having 1 to 4 carbon atoms, or a naphthyl; R¹ and R² are each independently a hydrogen atom or an alkyl having 1 to 4 carbon atoms; or A-C(-R¹)(-R²)-are together a group of the general formula (3) or (4) 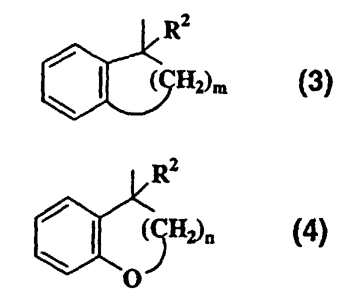 in which m is 2 or 3; and n is 1 or 2; R³ is a hydrogen atom or an alkyl having 1 to 4 carbon atoms; R⁴ and R⁵ are each independently a hydrogen atom, an alkyl having 1 to 6 carbon atoms, an alkoxy having 1 to 5 carbon atoms, a halogen atom, a halogenated alkyl having 1 to 5 carbon atoms, a cyano or a cyanoalkyl having 1 to 5 carbon atoms; R⁶ is an alkyl having 1 to 4 carbon atoms, an alkoxy having 1 to 4 carbon atoms or a halogen atom; and l is 0 to 2.

2. An algicide characterized by containing the benzylamine according to claim 1.

3. An agent for preventing the adhesion of organisms characterized by containing the benzylamine according to claim 1.
